# EUROPÄISCHE PATENTSCHRIFT

(11) **EP 0 721 547 B1**
(45) Veröffentlichungstag und Bekanntmachung des Hinweises auf die Patenterteilung: **26.05.1999**
(21) Anmeldenummer: 95927671.8
(22) Anmeldetag: 20.07.1995
(51) Int. Cl.: F16B 13/14, E21D 20/02

(54) **VERANKERUNGSPATRONE**
ANCHORING CARTRIDGE
CARTOUCHE D'ANCRAGE

(30) Priorität: 02.08.1994 DE 4427305
(43) Veröffentlichungstag der Anmeldung: 17.07.1996
(73) Patentinhaber: UPAT GMBH & CO, D-79312 Emmendingen (DE)
(72) Erfinder: GRÜN, Jürgen, D-79268 Bötzingen (DE); FRISCHMANN, Albert, D-79341 Kenzingen (DE); WEBER, Christian, D-79312 Emmendingen (DE)
(86) Internationale Anmeldenummer: EP9502857
(87) Internationale Veröffentlichungsnummer: WO9604484

(56) Entgegenhaltungen:
- DE-A- 3 215 115
- DE-A- 3 219 356
- GB-A- 2 241 761
- US-A- 5 222 835

## Beschreibung

Die Erfindung betrifft eine Verankerungspatrone für eine aushärtende Mehrkomponenten-Masse bestehend aus einem Harz und einem Härter gemäß der Gattung des Anspruchs 1.

Derartige Verankerungspatronen werden zusammen mit einem Befestigungselement, z.B. Ankerbolzen, zur Herstellung eines Verbundes in Beton verwendet. Die Zertrümmerung der im Bohrloch untergebrachten Patrone sowie das Vermischen der Komponenten erfolgt durch den Ankerbolzen, der mittels einer Schlagbohrmaschine oder von Hand durch Hammerschläge ins Bohrloch eingeführt wird. Für das Vermischen ist es zweckmäßig, den Ankerbolzen mit einem Gewinde zu versehen.

Die Praxis hat gezeigt, daß das Vermischen der Komponenten, insbesondere beim Einschlagen des Ankerbolzens mit dem Hammer, nicht ausreichend ist. Um ein besseres Zertrümmern der Patrone und Vermischen der Komponenten zu erreichen, wird vorgeschlagen, die Stirnseite des Bolzens mit einer Spitze (DE 39 21 697 A1) oder mit einer kegelförmigen Scheibe (DE 32 38 751 A1) zu versehen. Die Herstellung derartiger Ankerbolzen ist relativ schwierig und aufwendig.

Es ist auch bekannt, durch eine entsprechende Zuordnung der Komponenten in der Verankerungspatrone das Vermischen der Komponenten während des Einschlagens eines Ankerbolzens zu verbessern. Es ist beispielsweise in der DE 37 40 813 C2 eine Verankerungspatrone beschrieben, die die Härterkomponente als Kappe an einem oder beiden Enden der Patrone aufweist. Die Menge des Härters in den Kappen ist unterschiedlich und zwar ist im hinteren Bereich der Patrone eine größere Menge als im vorderen Bereich.

Gemäß dieser Erfindung wird zwar das Vermischen der Komponenten in der Anfangsphase der Montage verbessert, aber durch das unterschiedliche Verteilen des Härters kein gleichmäßiges Mischverhältnis zwischen Harz und Härter über den gesamten Verankerungsbereich gesichert. Dies führt wiederum zur Verschlechterung des Verbundes.

Der Erfindung liegt die Aufgabe zugrunde, eine Verankerungspatrone derart zu verbessern, daß ein gutes Vermischen der Komponenten gesichert, ein einfaches und leichtes Setzen der Ankerstange ermöglicht und hohe Verankerungswerte erreicht werden.

Erfindungsgemäß wird dies dadurch erreicht, daß auf das hintere Ende der Außenpatrone ein Mischelement, das mit mehreren Mischflügeln ausgestattet ist, aufgesetzt wird. Durch die wendelartige Anordnung der Flügel wirkt das Mischelement während des Setzvorgangs wie eine Mischspirale. Die Flügel sind zweckmäßig auf ihrem Umfang mit Lamellen, die im Durchmesser etwas größer sind als der Durchmesser des Bohrloches versehen.

Beim Setzvorgang wird die erfindungsgemäße Verankerungspatrone im Bohrloch durch ein leichtes Einschlagen eines Ankerbolzens mit dem Hammer zerstört und die einzelnen Komponenten vermischt. Durch den Drall der Mischspirale erfolgt eine radiale und vertikale Durchmischung der Komponenten, die zu einer besseren Homogenisierung der Masse und dadurch zu höheren Verankerungswerten führt.

Während des Setzvorgangs streifen die Lamellen des Mischelementes an der Bohrlochwandung und wirken wie eine Bürste. Das abgetragene Bohrmehl wird zusammen mit den Komponenten vermischt. Durch den zusätzlichen Reinigungseffekt wird der Benetzungsgrad der Bohrlochwandung mit der Klebemasse erhöht.

Eine einfache Möglichkeit zur Befestigung des Mischelementes an der Außenpatrone wird durch einen am vorderen Stirnende der Mischflügel angeordneten elastischen Kragen erreicht.

Im folgenden wird die Erfindung anhand eines in der Zeichnung dargestellten Ausführungsbeispiels näher erläutert.

Es zeigen:
- Figur 1: die Seitenansicht des Mischelementes
- Figur 1a: das in Figur 1 dargestellte Mischelement in Draufsicht
- Figur 2: die erfindungsgemäße Verankerungspatrone vor dem Einschlagen der Ankerstange
- Figur 3: die Ankerstange nach der Montage

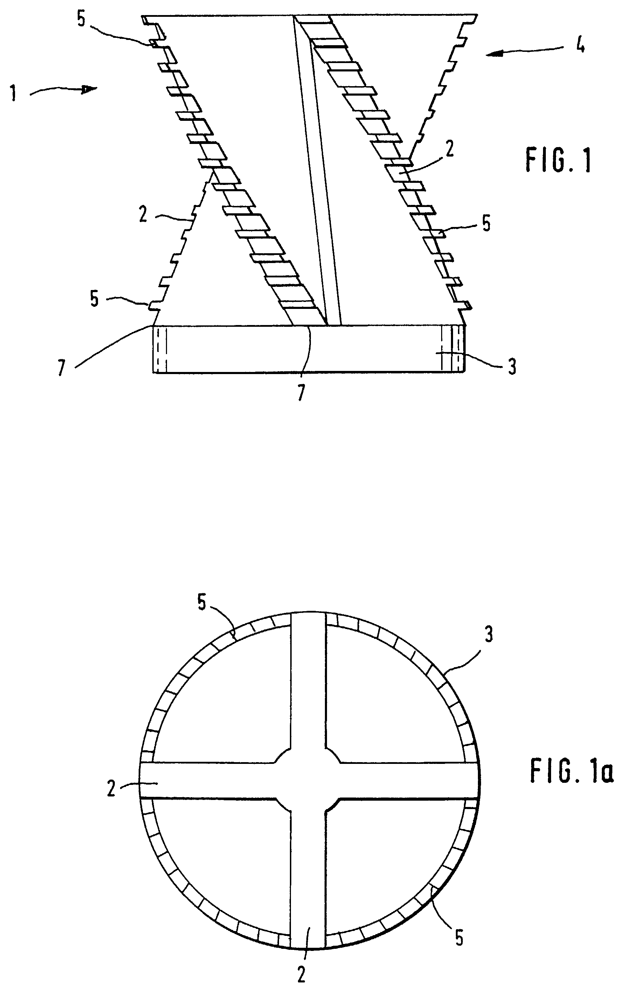

Das in Figur 1 dargestellte Mischelement 1 ist mit mehreren Mischflügeln 2 ausgestattet. Die Mischflügel 2 sind an ihrem vorderen Stirnende 7 mit einem ringförmigen Kragen 3, wie die Figur 1 a zeigt, verbunden. An die Längskanten 4 ,der Flügel 2 sind Lamellen 5 angebracht, wobei die Höhe der Lamellen so ausgewählt ist, daß der Durchmesser des Mischelementes 1 etwas größer als der Durchmesser des Bohrloches ist.

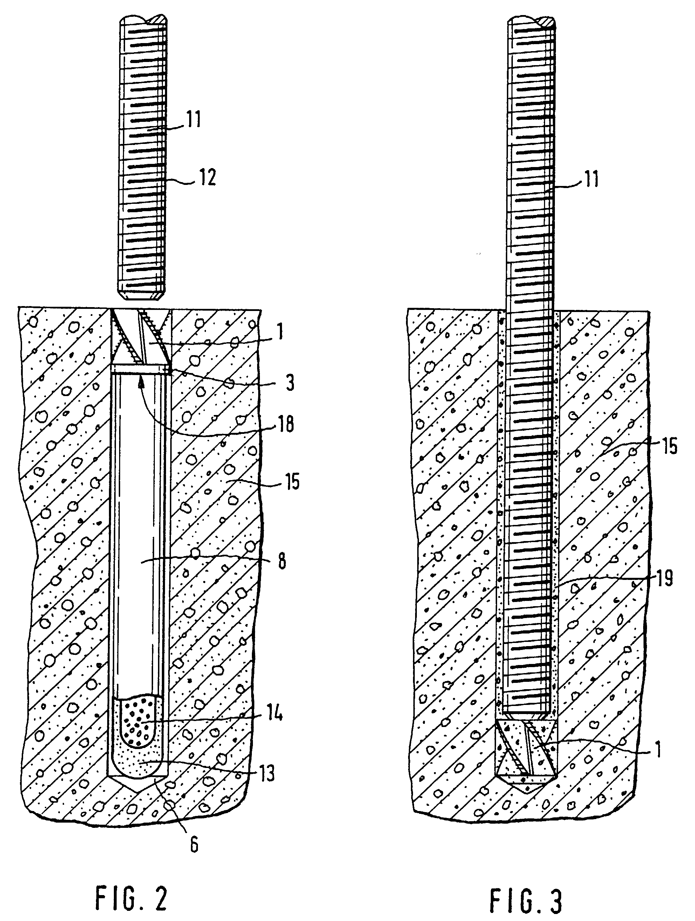

Die Figur 2 zeigt eine in das Bohrloch 6 angebrachte und mit einem Mischelement 1 versehene Verankerungspatrone 8. Die Patrone 8 besteht aus einer Innenpatrone 14 und einer Außenpatrone 13. Auf das hintere Ende 18, der Außenpatrone 13, ist ein Mischelement 1 aufgesetzt und durch den elastischen Kragen 3 mit der Verankerungspatrone 8 verbunden. Die Figur 2 zeigt weiterhin eine Ankerstange 11, die mit einem Gewinde 12 versehen ist.

Beim Setzvorgang wird, wie die Figur 3 darstellt, die erfindungsgemäße Verankerungspatrone 1 durch das Einschlagen der Ankerstange 11 zerstört und die einzelnen Komponenten vermischt. Während des Setzvorganges streifen die Lamellen 5 des Mischelementes 1 an der Bohrlochwandung und sorgen für die zusätzliche Reinigung des Bohrloches. Nach dem Abschluß des Setzens verbleibt das Mischelement 1 im Bohrloch und bildet zusammen mit den ausgehärteten Komponenten einen festen Verbund 19 zum Befestigungsgrund 15.

## Patentansprüche

1. Verankerungspatrone (8) für eine aushärtende Mehrkomponenten-masse, bestehend aus einem Harz und Härter, mit einer die erste Komponente enthaltenden, rohrförmigen Innenpatrone (14), die in einer die zweite Komponente enthaltenden, rohrförmigen Außenpatrone (13) einliegt, **dadurch gekennzeichnet**, daß das hintere Ende (18) der Außenpatrone (13) mit einem Mischelement (1) versehen ist.

2. Verankerungspatrone nach Anspruch 1, **dadurch gekennzeichnet**, daß das Mischelement (1) mit mehreren Mischflügeln (2) versehen ist.

3. Verankerungspatrone nach Anspruch 2, **dadurch gekennzeichnet**, daß die Mischflügel (2) an ihrem vorderen Stirnende mit einem ringförmigen Kragen (3) verbunden und an ihren Längskanten mit Lamellen (15) versehen sind.

4. Verankerungspatrone nach Anspruch 1, **dadurch gekennzeichnet**, daß der Durchmesser des Mischelementes (1) größer als der Durchmesser des Bohrloches (6) ist.

## Claims

1. Anchoring cartridge (8) for a curable multi-component compound consisting of a resin and hardener, having a tubular inner cartridge (14) containing the first component arranged inside a tubular outer cartridge (13) containing the second component, **characterized in that** the rear end (18) of the outer cartridge (13) is provided with a mixing element (1).

2. Anchoring cartridge according to claim 1, **characterized in that** the mixing element (1) is provided with a plurality of mixing blades (2).

3. Anchoring cartridge according to claim 2, **characterized in that** the mixing blades (2) are connected at their forward end to an annular collar (3) and are provided on their longitudinal edges with fins (5).

4. Anchoring cartridge according to claim 1, **characterized in that** the diameter of the mixing element (1) is greater than the diameter of the drilled hole (6).

## Revendications

1. Cartouche d'ancrage (8) pour une masse à plusieurs composants, durcissable, constituée d'une résine et d'un mélangeur, comportant une cartouche intérieure tubulaire (14) qui contient le premier composant et se place dans une cartouche extérieure tubulaire (13) qui contient le second composant, caractérisée par le fait que l'extrémité arrière (18) de la cartouche extérieure (13) est munie d'un élément mélangeur (1).

2. Cartouche d'ancrage selon la revendication 1, caractérisée par le fait que l'élément mélangeur (1) est muni de plusieurs ailettes mélangeuses (2).

3. Cartouche d'ancrage selon la revendication 2, caractérisée par le fait que les ailettes mélangeuses (2) sont réunies à leur extrémité frontale avant par un collet annulaire (3) et sont munies sur leurs bords longitudinaux de lamelles (15).

4. Cartouche d'ancrage selon la revendication 1, caractérisée par le fait que le diamètre de l'élément mélangeur (1) est supérieur à celui du trou percé (6).
